# FASCICULE DE BREVET EUROPEEN

(11) **EP 0 448 490 B1**
(45) Date de publication et mention de la délivrance du brevet: **01.09.1993**
(21) Numéro de dépôt: 91460010.1
(22) Date de dépôt: 12.03.1991
(51) Int. Cl.: B62D 33/02, B60P 1/28

(54) **Caisse de remorque**
Kastenaufbau für Anhänger
Trailer body

(30) Priorité: 20.03.1990 FR 9003787
(43) Date de publication de la demande: 25.09.1991
(73) Titulaire: ETABLISSEMENTS ROLLAND S.A., F-29311 Landerneau Cédex (FR)
(72) Inventeur: Emily, Jean-Yves, F-29311 Landerneau Cedex (FR)
(74) Mandataire: Le Guen, Louis François

(56) Documents cités:
- AU-B- 80 627
- FR-A- 1 184 375
- FR-A- 1 349 703
- FR-A- 2 153 714

## Description

L'invention concerne une caisse d'une remorque, notamment, d'une remorque du type agricole et en particulier d'une remorque épandeuse de fumier ou d'une remorque à benne basculante.

Les caisses de remorques de type agricole sont, en général, constituées d'un fond, d'une paroi avant, et deux parois latérales. Ces dernières sont montées sur le fond de manière à y être sensiblement dans un plan vertical. Elles sont généralement parallèles à l'axe longitudinal de la caisse ou, encore, dans certains modèles, se rapprochent l'une de l'autre vers l'arrière de la caisse.

L'inconvénient majeur que présentent de telles caisses provient du fait que, lors du déchargement des produits qu'elles contiennent, ceux-ci, entraînés vers l'arrière par leur propre poids dans le cas d'une benne basculante ou par un dispositif de transport approprié dans le cas de remorque épandeuse, rencontrent, de la part des parois latérales, des résistances à leur mouvement. Ils sont donc freinés et se tassent. Le bourrage qui peut en résulter nécessite une opération de débourrage qui présente des difficultés et qui peut être dangeureuse à effectuer.

Le document AU-A-80 627 décrit une solution à ce problème. Elle consiste à prévoir une benne ayant une caisse à deux parois latérales dont chacune d'elle, verticale, présente, avec l'axe longitudinal de la caisse, un angle aigu de manière que sa partie arrière soit dirigée vers l'extérieur. Ainsi, la section de ladite caisse par un plan transversal croit progressivement de l'avant vers l'arrière.

L'effet de l'accroissement de la largeur est la réduction des frottements entre la masse du matériau et la benne et la réduction des pressions latérales exercées par le matériau tassé sur les parois latérales. Il est également d'assister la fragmentation de la masse qui coule alors plus librement et plus régulièrement vers l'extérieur de la benne. Enfin, il est de réduire l'angle de basculement afin de permettre une sortie du matériau en quantités plus précises et plus mesurées.

On a cependant constaté, que dans des cas particuliers, par exemple lors de la manipulation de matériaux très adhérents, les mesures préconisées dans ce document ne suffisaient pas à obtenir un déchargement sans nécessiter une opération de débourrage.

Le but de l'invention est donc de proposer une caisse de remorque, par exemple, du type à benne basculante ou du type remorque épandeuse qui ne nécessite pas d'opération de débourrage, même dans des cas difficiles.

Ce but est atteint par la mise en oeuvre de la combinaison des moyens qui sont définis dans la revendication 1. Des caractéristiques préférentielles sont indiquées dans les revendications dépendantes.

Ces caractéristiques, ainsi que d'autres, apparaîtront plus clairement à la lecture de la description suivante de deux exemples de réalisation, ladite description étant faite en relation avec les dessins joints, parmi lesquels:
la Fig. 1 est une vue schématique en élévation d'une remorque à benne basculante équipée d'une caisse selon l'invention,
la Fig. 2 est une vue de dessus d'une caisse selon l'invention,
la Fig. 3 est une vue en coupe selon l'axe III/III de la Fig. 2, et
la Fig. 4 est une vue de l'arrière d'une caisse selon l'invention.

La description qui suit, donnée à titre d'exemple, est celle d'une remorque à benne basculante équipée d'une caisse selon l'invention. On comprendra aisément que la caisse de l'invention peut également équiper des remorques du type épandeuse et les adaptations nécessaires seront décrites, si nécessaire, ultérieurement.

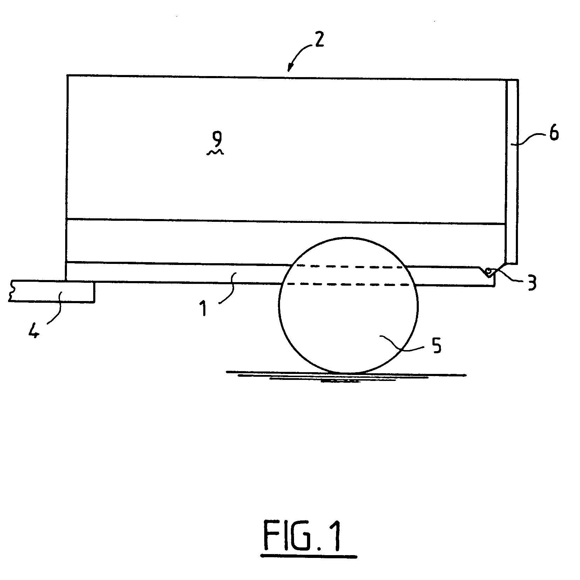

La remorque représentée à la Fig. 1 comprend un châssis 1 sur lequelle est montée une benne 2 qui peut basculer, sous l'action d'un vérin (non représenté) autour d'un axe transversal 3 prévu à l'arrière du châssis 1. A l'avant du châssis 1, est prévu un timon 4 pour l'attelage de la remorque à un véhicule tracteur et un essieu dont on ne voit ici qu'une roue 5.

On notera que l'invention peut s'appliquer également à des remorques à plusieurs essieux et à des remorques autotractées.

Une porte 6 fermant la benne 2 est montée à l'arrière de la benne par des moyens qui, ne faisant pas l'objet de la présente demande de brevet, ne sont pas décrits, mais dont la mise en oeuvre est connue de l'homme de métier.

Dans le cas d'une remorque épandeuse, la porte arrière est remplacée par un dispositif épandeur connu de l'homme de métier.

Dans la description qui suit, on considèrera que la benne 2 est en position abaissée, c'est-à-dire, sensiblement horizontale.

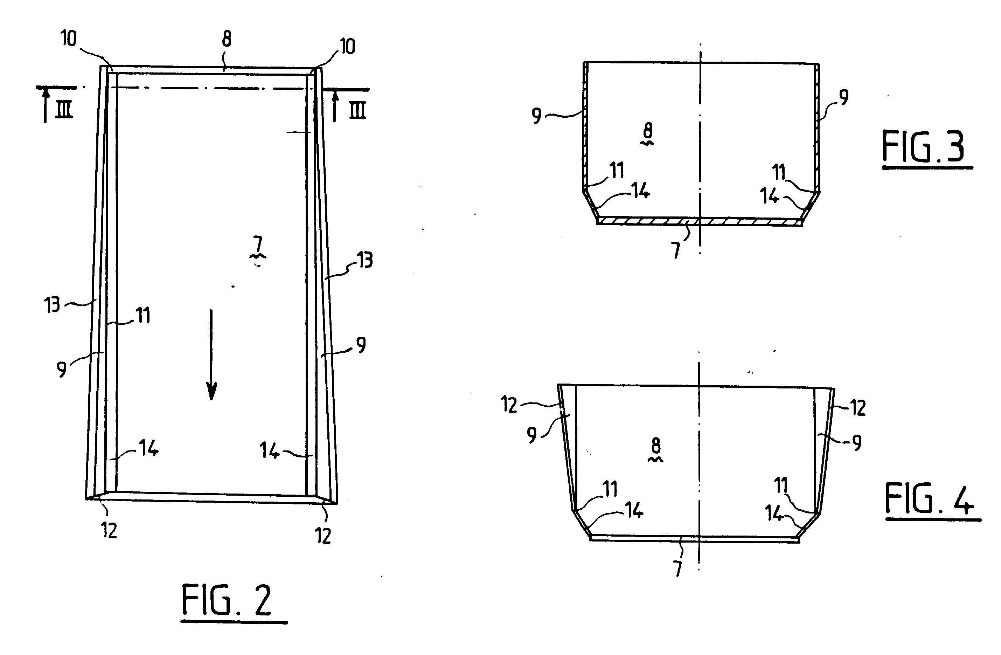

Elle est constituée d'une caisse qui comprend (Figs. 2 à 4), d'une part, dans un plan horizontal, un fond 7 sensiblement rectangulaire, et, d'autre part, dans un plan vertical, une paroi avant 8 fixée par son côté inférieur à un des petits côtés du fond 7. Elle comprend, de plus, deux parois latérales 9.

Chaque paroi latérale 9 de la caisse 2 est fixée, par son bord avant 10, sur le bord latéral correspondant de la paroi avant 8 et, par son bord inférieur 11, sur le bord longitudinal correspondant du fond 7 (Figs. 2 et 3). Son bord arrière 12 est incliné par rapport à la verticale de manière que sa partie supérieure soit dirigée vers l'extérieur de la caisse 2 (Fig. 4) et son bord horizontal supérieur 13 présente, avec l'axe longitudinal de la caisse 2, un angle aigu de manière que sa partie arrière soit dirigée vers l'extérieur de la caisse 2 (Fig. 2). Dans un plan horizontal, les parois latérales 9 s'écartent un peu plus l'une de l'autre au fur et à mesure que l'on se déplace vers l'arrière et, dans un plan vertical, elles sont d'autant plus inclinées par rapport à la verticale que l'on se déplace également vers l'arrière. On remarquera que la section de la caisse 2 selon un plan transversal croît progressivement de l'avant vers l'arrière.

Dans l'exemple de réalisation représenté sur les Figs., entre chaque paroi latérale 9 et le fond 7, est prévue une paroi 14 ayant une forme sensiblement rectangulaire et dont les côtés longitudinaux sont parallèles à l'axe longitudinal de la caisse. Elle est plus inclinée, par rapport à la verticale, que la paroi 9, mais dans le même sens selon un plan vertical transversal. Ces parois 14 permettent d'accroître le volume de la benne sans que cela entraîne une augmentation de la surface du fond 7.

Lorsque la benne est levée pour être déchargée, son contenu est entraîné, par simple gravité, vers l'arrière. La section transversale de la caisse 2 croissant progressivement de l'avant vers l'arrière, et vu les inclinaisons horizontale et verticale des parois latérales 9, il ne rencontre pas, de leur part, de résistance dans son mouvement vers l'arrière. Le déchargement s'effectue donc sans bourrage des produits à décharger et est, par conséquent, grandement facilité.

Dans le cas d'une remorque épandeuse, la caisse est équipée, dans son fond, d'un dispositif d'entraînement généralement constitué de deux chaînes qui passent sur des roues à chaînes et qui sont liées ensemble par des traverses. Des dispositifs de ce genre sont bien connus de l'homme de métier. Pour le déchargement du produit contenu dans la caisse, celle-ci, étant fixe et horizontale le dispositif d'entraînement est mis en route. Les traverses entraînent alors le produit vers l'arrière de la même manière que le fait le poids dans une remorque à benne basculante. Là aussi, la caisse, du fait de sa forme particulière, n'offre pas de résistance à ce déchargement.

## Revendications

1. Caisse de remorque, par exemple, du type à benne basculante ou du type épandeuse comprenant un fond, une paroi avant fixée par son côté inférieur audit fond et deux parois latérales respectivement fixées, par leur côté inférieur, sur les côtés longitudinaux du fond et, par leur côté avant, sur les côtés latéraux de la paroi avant, chaque paroi latérale (9) présentant, avec l'axe longitudinal de la caisse, un angle aigu de manière que sa partie arrière soit dirigée vers l'extérieur, la section de ladite caisse par un plan transversal ayant une surface gui augmente progressivement de l'avant vers l'arrière, caractérisée en ce que chaque paroi latérale (9) est en outre inclinée par rapport à la verticale de manière que sa partie supérieure soit dirigée vers l'extérieur de la caisse.

2. Caisse selon la revendication 1, caractérisée en ce que le bord avant (10) et l'arête inférieure (11) de chaque paroi latérale (9) sont dans un même plan longitudinal.

3. Caisse selon la revendication 2, caractérisée en ce qu'entre chaque paroi latérale (9) et le fond (7), est prévue une paroi (14) sensiblement rectangulaire avec ses deux côtés longitudinaux parallèles à l'axe longitudinal de la caisse (2) et plus inclinée, dans le même sens dans un plan transversal, que la paroi latérale (9) correspondante.

## Patentansprüche

1. Kastenaufbau für Anhänger, z.B. vom Typ mit Kippbehälter oder Streubehälter, mit einem Bodenteil, einer Vorderwand, die mit ihrer Unterseite mit dem Bodenteil verbunden ist, und mit zwei Seitenwänden, die jeweils mit ihrer Unterseite an den Längskanten des Bodens und mit ihrer vorderen Kante an den Seitenkanten der Vorderwand befestigt sind, wobei jede Seitenwand (9) mit der Längsachse des Kastenaufbaus einen spitzen Winkel bildet, derart, daß sein hinteres Teil nach außen gerichtet ist und der Querschnitt des Kastenaufbaus in einer Querebene eine Fläche darstellt, die von vorne nach hinten fortschreitend zunimmt, **dadurch gekennzeichnet**, daß jede Seitenwand (9) außerdem bezüglich der Vertikalen derart geneigt ist, daß ihr oberes Teil zum Äußeren des Kastenaufbaus gerichtet ist.

2. Kastenaufbau nach Anspruch 1, **dadurch gekennzeichnet**, daß der vordere Rand (10) und die Unterkante (11) jeder Seitenwand (9) in derselben Längsebene liegen.

3. Kastenaufbau nach Anspruch 2, **dadurch gekennzeichnet**, daß zwischen jeder Seitenwand (9) und dem Bodenteil (9) eine im wesentlichen rechteckige Wand (14) vorgesehen ist, deren zwei Längskanten parallel zur Längsachse des Kastenaufbaus gerichtet sind, und die in einer Querebene in derselben Richtung stärker als die entsprechende Seitenwand (9) geneigt ist.

## Claims

1. Trailer body, e.g. of the dumper type or of the spreader type, comprising a base, a front wall attached to said base by its lower edge and two side walls respectively attached, by their lower edge, to the longitudinal edges of the base and, by their front edge, to the side edges of the front wall, each side wall (9) extending at an acute angle to the longitudinal axis of the body in such a way that its rear portion is directed outwards, the cross-section of said body having an area which gradually increases from the front rearwards, characterised in that each side wall (9) also is inclined to the vertical in such a way that its upper portion is directed outwards from the body.

2. Body according to claim 1, characterised in that the front edge (10) and the lower line (11) of each side wall (9) are located in a common longitudinal plane.

3. Body according to claim 2, characterised in that, between each side wall (9) and the base (7), a roughly rectangular wall (14) is provided, its two longitudinal sides being parallel to the longitudinal axis of the body (2) and more inclined, in the same direction in a transverse plane, than the corresponding side wall (9).
